# EUROPEAN PATENT APPLICATION

(11) **EP 4 768 982 A1**
(43) Date of publication of application: **01.07.2026**
(21) Application number: 25226338.9
(22) Date of filing: 22.12.2025
(51) Int. Cl.: G01S 7/10, G01S 13/86, G01S 13/931, G01S 15/931, G01S 17/931, G01S 7/51, G01S 7/62, G01S 7/22, G01S 13/87, G01S 15/87, G01S 17/87

(54) **SYSTEMS AND METHODS FOR MONITORING AN ENVIRONMENT OF AVEHICLE**

(30) Priority: 31.12.2024 US 202463740908 P
(71) Applicant: Harman Becker Automotive Systems, Inc., Novi, MI 48377 (US)
(72) Inventor: SUN, Haoliang, Novi, MI 48377 (US); LYON, David Gillet, Novi, MI 48377 (US); LOEHL, Pascal, Novi, MI 48377 (US); DAGG, Brian, Novi, MI 48377 (US)
(74) Representative: Westphal, Mussgnug & Partner, Patentanwälte mbB

(57) **Abstract**

A method including the display of an external environment of a vehicle, the detection of one or more hazards within a distance-related threshold from the vehicle, and the display of a hazard visualization corresponding to a location of the one or more hazards.

## Description

### CROSS-REFERENCE TO RELATED APPLICATIONS

This application claims the benefit of US provisional application 63/740,908 filed on December 31, 2024. The disclosure of the above applications is incorporated herein by reference.

### FIELD

The present disclosure relates to the monitoring of an environment, and more particularly, to monitoring the environment in relation to a location of a vehicle.

### BACKGROUND

The statements in this section merely provide background information related to the present disclosure and may not constitute prior art.

Traditional backup visualizers provide an abstracted and downscaled representation of an outside world relative to a perspective of a vehicle. As a result, inaccurate depiction(s) of surrounding hazards relative to a location of the vehicle may be provided to an operator of the vehicle.

The present disclosure addresses these and other issues related to monitoring an environment in relation to the location of the vehicle.

### SUMMARY

This section provides a general summary of the disclosure and is not a comprehensive disclosure of its full scope or all of its features.

The present disclosure provides a method comprising: displaying an external environment of a vehicle in response to an initiation of a gear shift; detecting, by one or more sensors of a sensor suite, one or more hazards within a distance-related threshold from the vehicle; and displaying a hazard visualization corresponding to a location of the one or more hazards in response to detecting the one or more hazards; wherein the one or more sensors include one or more LIDAR sensors, one or more radar sensors, one or more ultrasonic sensors, one or more thermal imaging sensors, one or more night vision sensors, or a combination thereof; further comprising: displaying the external environment of the vehicle associated with a field of view corresponding to a rear-set of sensors of the sensor suite in response to an initiation of a reverse gear shift; further comprising: displaying the external environment of the vehicle associated with a field of view corresponding to a front-set of sensors of the sensor suite in response to an initiation of a forward gear shift; further comprising: displaying the external environment of the vehicle associated with a field of view corresponding to one or more side-positioned sensors of the sensor suite in response to the initiation of the gear shift; wherein displaying the hazard visualization further comprises: highlighting an area associated with a location of the one or more hazards via a panoramic view of the vehicle; streaming the one or more hazards approaching the vehicle via a panoramic view of the external environment of the vehicle; and highlighting the location of the one or more hazards via a portion of a surface of the vehicle, wherein the portion of the surface is configured to graphically display the location of the one or more hazards; wherein displaying the hazard visualization further comprises: highlighting an area associated with a location of the one or more hazards via a panoramic view of the vehicle; streaming the one or more hazards approaching the vehicle via a panoramic view of the external environment of the vehicle; or highlighting the location of the one or more hazards via a portion of a surface of the vehicle, wherein the portion of the surface is configured to graphically display the location of the one or more hazards; and further comprising: transmitting one or more alerts in response to detecting the one or more hazards, wherein the one or more alerts include one or more visual alerts, one or more auditory alerts, one or more haptic alerts, or a combination thereof.

The present disclosure provides a system comprising: a processor; and a non-transitory computer-readable medium including instructions that are executable by the processor, wherein the instructions include: displaying an external environment of a vehicle in response to an initiation of a gear shift; detecting, by one or more sensors of a sensor suite, one or more hazards within a distance-related threshold from the vehicle; and displaying a hazard visualization corresponding to a location of the one or more hazards in response to detecting the one or more hazards; wherein the one or more sensors include one or more LIDAR sensors, one or more radar sensors, one or more ultrasonic sensors, one or more thermal imaging sensors, one or more night vision sensors, or a combination thereof; wherein the instructions further include: displaying the external environment of the vehicle associated with a field of view corresponding to a rear-set of sensors of the sensor suite in response to an initiation of a reverse gear shift; wherein the instructions further include: displaying the external environment of the vehicle associated with a field of view corresponding to a front-set of sensors of the sensor suite in response to an initiation of a forward gear shift; wherein the instructions further include: displaying the external environment of the vehicle associated with a field of view corresponding to one or more side-positioned sensors of the sensor suite in response to the initiation of the gear shift; wherein displaying the hazard visualization further includes: highlighting an area associated with a location of the one or more hazards via a panoramic view of the vehicle; streaming the one or more hazards approaching the vehicle via a panoramic view of the external environment of the vehicle; and highlighting the location of the one or more hazards via a portion of a surface of the vehicle, wherein the portion of the surface is configured to graphically display the location of the one or more hazards; wherein displaying the hazard visualization further includes: highlighting an area associated with a location of the one or more hazards via a panoramic view of the vehicle; streaming the one or more hazards approaching the vehicle via a panoramic view of the external environment of the vehicle; or highlighting the location of the one or more hazards via a portion of a surface of the vehicle, wherein the portion of the surface is configured to graphically display the location of the one or more hazards; and wherein the instructions further include: transmitting one or more alerts in response to detecting the one or more hazards, wherein the one or more alerts include one or more visual alerts, one or more auditory alerts, one or more haptic alerts, or a combination thereof.

The present disclosure provides a system comprising a processor and a non-transitory computer-readable medium including instructions that are executable by the processor, wherein the instructions include: detecting, by one or more sensors of a sensor suite, one or more hazards within a distance-related threshold from the vehicle; highlighting, in response to detecting the one or more hazards, an area associated with a location of the one or more hazards via a panoramic view of the vehicle; transmitting, in response to detecting the one or more hazards, one or more alerts, wherein the one or more alerts include one or more visual alerts, one or more auditory alerts, one or more haptic alerts, or a combination thereof; the one or more sensors include one or more LIDAR sensors, one or more radar sensors, one or more ultrasonic sensors, one or more thermal imaging sensors, one or more night vision sensors, or a combination thereof; the instructions further include: displaying the external environment of the vehicle associated with a field of view corresponding to a rear-set of sensors of the sensor suite in response to an initiation of a reverse gear shift; and/or the instructions further include: displaying the external environment of the vehicle associated with a field of view corresponding to a front-set of sensors of the sensor suite in response to an initiation of a forward gear shift.

### DRAWINGS

In order that the disclosure may be well understood, there will now be described various forms thereof, given by way of example, reference being made to the accompanying drawings, in which:
FIG. 1 is an example vehicle configured to monitor traffic in accordance with one or more embodiments of the present disclosure;
FIG. 2 is a block diagram illustrating a sensor suite controller in accordance with one or more embodiments of the present disclosure;
FIG. 3 is a side diagrammatic view of a content display environment in accordance with one or more embodiments of the present disclosure;
FIG. 4 is a top diagrammatic view of the content display environment of FIG. 3 in accordance with one or more embodiments of the present disclosure;
FIGS. 5A, 5B, 5C, 5D, and 5E are example projections utilizing the content display environment of FIGS. 3 and 4 in accordance with one or more embodiments of the present disclosure;
FIG. 6 is a flowchart illustrating an example method for monitoring an environment in relation to a location of the vehicle of FIG. 1 in accordance with one or more embodiments of the present disclosure; and
FIG. 7 is a block diagram illustrating an example computer system in accordance with one or more embodiments of the present disclosure.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

One or more embodiments of the present disclosure provide systems and methods for monitoring an environment in relation to a location of a vehicle. More specifically, a vehicle system of the vehicle can implement systems and methods for providing a visualized surround view that leverages sensors and/or cameras that encompass the vehicle to provide drivers as well as passengers with enhanced awareness of the environment around them.

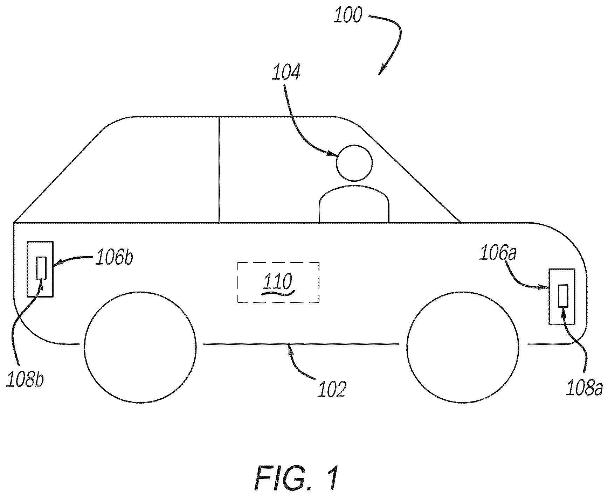

FIG. 1 illustrates a system 100 configured to implement one or more aspects of the various embodiments. As shown, the system 100 generally depicts a vehicle 102 that includes, without limitation, a user 104 and a sensor suite 106 (e.g., a front sensor suite 106a and a back sensor suite 106b). In one or more examples, the sensor suite 106 is comprised of a plurality of sensors affixed to one or more bumpers of the vehicle 102, each of which can include, but is not limited to, one or more of cameras, LIDAR sensors, radio detection and ranging (radar) sensors, and/or ultrasonic sensors. The sensor suite 106 can include a sensor suite controller 108 (e.g., a front sensor suite controller 108a and a back sensor suite controller 108b) therein, and while the sensor suite controller 108 is depicted as internally disposed within the sensor suite 106 it is understood that the sensor suite controller 108 can be located anywhere in relation to the sensor suite 106. It is also understood that the vehicle 102 can include a single, and centrally located sensor suite controller 108, that the sensor suite 106 can communicate with. The vehicle 102 also includes a vehicle-side algorithm 110 that is configured to serve as a vehicle system enabled to facilitate one or more functionalities of each of the described other components of the vehicle 102 (the sensor suite 106 and/or the sensor suite controller 108), as is described herein.

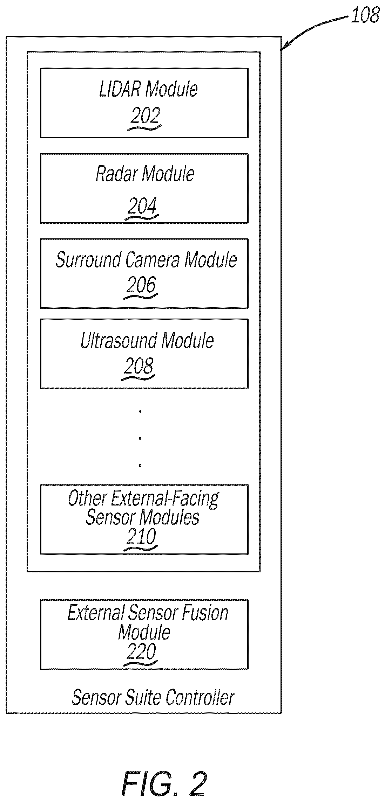

FIG. 2 illustrates a more detailed view of the sensor suite controller 108 of FIG. 1, according to various embodiments. The sensor suite controller 108 includes, without limitation, one or more of a LIDAR module 202, a radar module 204, a surround camera module 206, an ultrasound module 208, other external-facing sensor modules 210, and/or an external sensor fusion module 220.

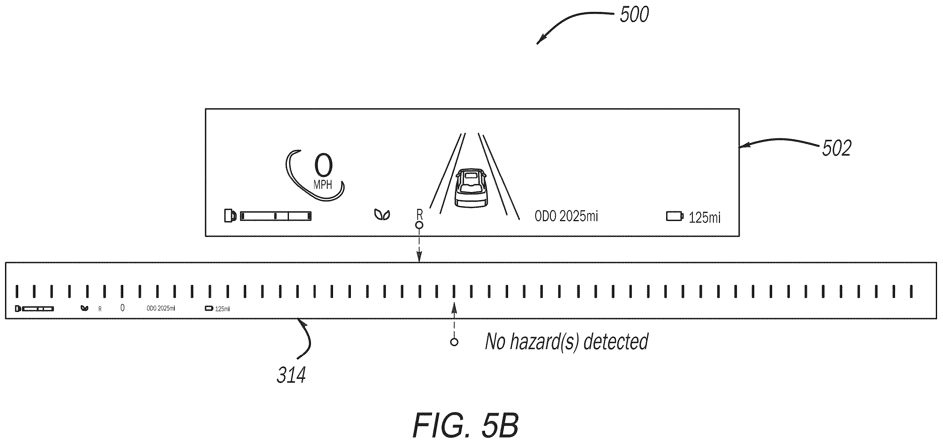

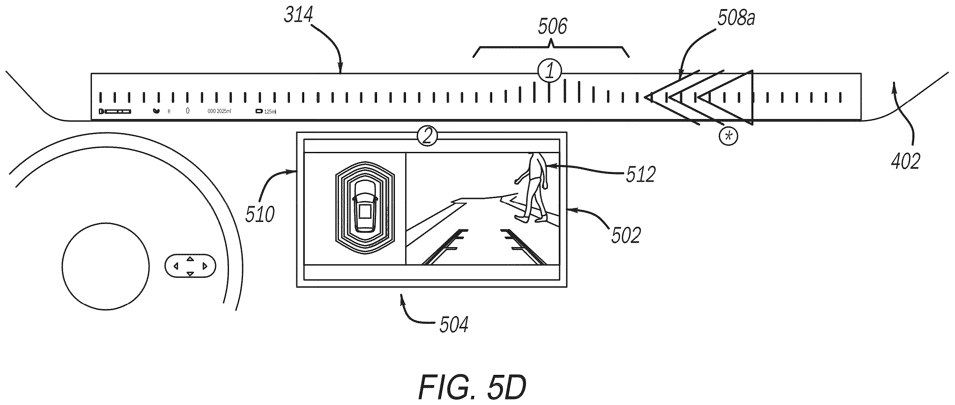

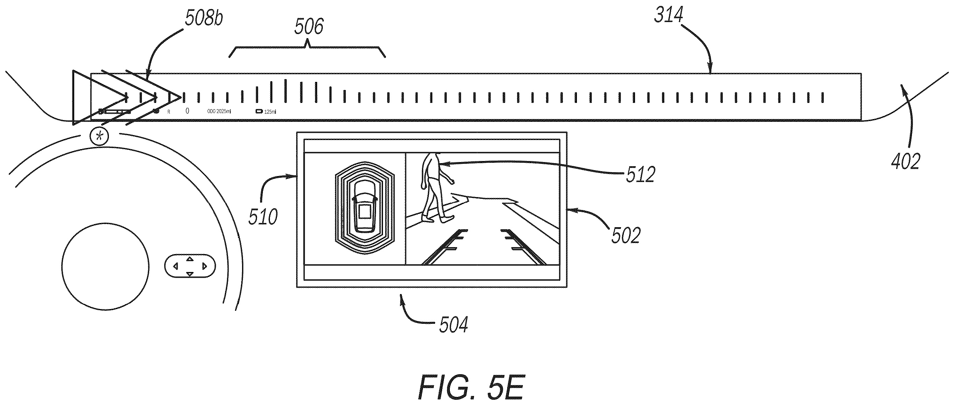

The LIDAR module 202 includes LIDAR sensors and associated processing circuitry that detects objects in an environment (e.g., an environment 502 as shown in FIGS. 5D and 5E) associated with the vehicle 102 and measures the distance between those objects and the vehicle 102. The LIDAR module 202 illuminates a target object with an optical pulse signal and measures the characteristics of the return signal reflected off the object. The radar module 204 includes radar sensors and associated processing circuitry that detects the speed of objects in the environment 502 associated with the vehicle 102 and measures the distance between those objects and the vehicle 102. The radar module 204 transmits radio waves towards a target object, where the radio waves strike and reflect off the object. The radar module 204 measures the characteristics of the return signal reflected off the object.

The surround camera module 206 includes surround view cameras and associated processing circuitry that detects objects in the environment 502 associated with the vehicle 102 and measures the distance between those objects and the vehicle 102. The surround camera module 206 captures images at various points around the perimeter of the vehicle 102. The surround camera module 206 stitches the images together and analyzes the images to estimate the location various objects illustrated in the images are from the vehicle 102 and estimates the distance between those objects and the vehicle 102. The ultrasound module 208 includes ultrasound sensors and associated processing circuitry that detects objects in the environment 502 associated with the vehicle 102 and measures the distance between those objects and the vehicle 102. The ultrasound module 208 transmits sound waves towards a target object, where the sound waves strike and reflect off the object. The ultrasound module 208 measures the characteristics of the return signal reflected off the object. Other external-facing sensor modules 210 include various additional sensors and associated processing circuitry that detects objects in the environment and measures the distance between those objects and the vehicle 102. Non-limiting examples of the external-facing sensor modules 210 can include thermal imaging sensors, night vision sensors, among others.

The external sensor fusion module 220 integrates the output of one or more of the LIDAR module 202, the radar module 204, the surround camera module 206, the ultrasound module 208, and/or the other external-facing sensor modules 210. Accordingly, the external fusion module 220 determines the types, locations, and/or speeds of external potentially hazardous conditions relevant to the vehicle 102, such as other road users (such as pedestrians, bicyclists, motorcyclists, and other vehicles), landmarks (such as traffic lights and buildings), the signal color and pedestrian indicator on detected traffic lights, among others as is described herein.

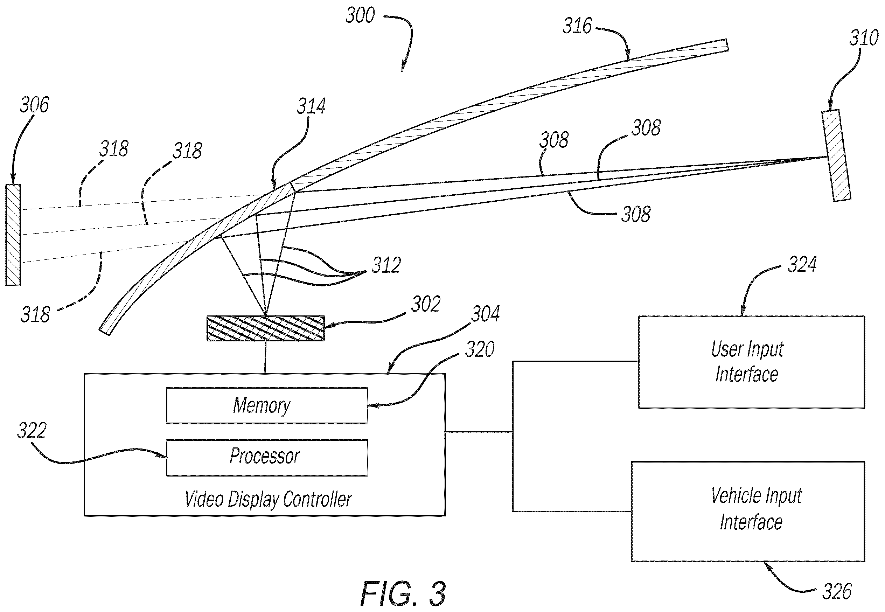

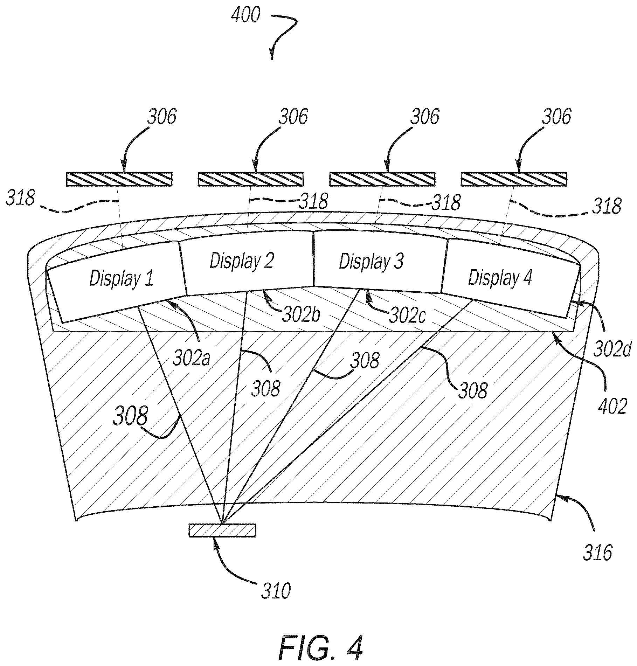

Referring to FIG. 3, an example display system 300 is shown and generally includes one or more display units 302 (e.g., a plurality of display units 302a-302d as shown in FIG. 4) and a video display controller 304. In some examples, the display system 300 is implemented within the vehicle 102 to project content 306 (e.g., images, text, etc.) perceivable by a user 104 (e.g., also embodied as a driver as shown in FIG. 1). It is understood that the projected content 306 being perceivable in one or more embodiments means that the projected content 306 can be understood or reasonably interpreted by the user 104 (e.g., displayed in an orientation that is readable by the user 104 viewing a windshield of the vehicle 102). It is also understood that the user 104 can be a human operator of the vehicle 102, a passenger of the vehicle 102, or any other person associated with the operation and/or occupant of the vehicle 102. It should be understood, however, that the display system 300 can be implemented within any general system wherein content may be projected to the user 104, such as a theater or classroom setting and is not limited to the examples described herein. In one or more examples, the projected content 306 can appear within an optical path 308 that originates from an eyebox 310 of the user 104 and represents at least a portion of a viewable range of the user 104. It is understood that the optical path 308 may vary based on the height of the eyebox 310 of the user 104 that can correspond (e.g., directly/indirectly) to a height of the user 104.

In one or more examples, one or more images are projected as a first light path 312 against a portion 314 (e.g., a display portion) of a surface 316 from the one or more display units 302. With particular reference to FIG. 4, an example system 400, in one or more embodiments, illustrates an implementation of the plurality of display units 302a-302d positioned over and along a dashboard 402 of the vehicle 102. It is understood, however, that the plurality of display units 302a-302d can be integrated within the dashboard 402 as well. It is also understood that the example system 400, in one or more embodiments, can implement a single display unit (not shown) that spans the entirety of the dashboard 402.

Referring back to FIG. 3, and as is depicted in FIG. 4, the surface 316 is a windshield of the vehicle 102. However, it is understood that the surface 316 can be any surface upon which content can be projected. As another example, the portion 314 of the surface 316 is a solid color-blocked band near an edge of the surface 316 (e.g., along a bottom of the windshield) that may gradually dissolve into minimally-sized dots (e.g., a frit). As yet another example, the portion 314 of the surface 316 can be a painted enamel that can be any color. However, it is understood that the portion 314 of the surface 316 can be colored with any type of paint, material, or process. As a further example, and because the portion 314 of the surface 316 causes the projected one or more images to be reflected, an inversion of the projected one or more images occurs and causes the projected one or more images to be displayed so that the projected content 306 is perceivable to the user 104 (e.g., viewable in the correct orientation). In one or more embodiments, the inverted form of the projected one or more images is represented by a second light path 318. In one or more examples, the projected content 306 displays a graphical view of the environment 502, as is described herein.

In one or more embodiments, the video display controller 304 includes a memory 320 and a processor 322, wherein the processor 322 is configured to execute one or more instructions stored in the memory 320 to control an output of the display unit 302. It is understood that the processor 322 can represent an application specific integrated circuit (ASIC), a field programmable gate array and/or a system on chip that can contain one or more interfaces including, but not limited to, a video interface, an audio interface, and/or any other interface related to a processing capability associated with the vehicle 102. It is also understood that the processor 322 can represent any other processing integrated circuit. The video display controller 304 may control the display unit 302 and thereby cause the display unit 302 to project particular images and/or other data (or any content) based on the one or more instructions stored in the memory 320 and/or based on other inputs from the user 104. For example, a user input interface 324 and a vehicle input interface 326 may be used to provide one or more instructions to the video display controller 304 to control the display unit 302 based on user input (e.g., input from the user 104) and vehicle data/status, respectively. For example, user input to change a type of information displayed (e.g., to select between instrument data such as speed/RPM/etc. and navigation data such as turn directions), to select options when a graphical user interface is displayed, and/or to otherwise indicate preferences of the user 104 are provided to the video display controller 304 and processed to alter a content, height, and/or format of the displayed data. As an example, the content may be data (e.g., music files, video files, recorded sound waves, etc.). It is understood that the user input interface 324, in some examples, receives user input from any suitable user input device, including but not limited to a touch screen, vehicle-mounted actuators (e.g., buttons, switches, knobs, dials, etc.), a microphone (e.g., for voice commands), an external device (e.g., a mobile device of a vehicle occupant), and/or other user input devices.

The vehicle input interface 326 receives data from one or more vehicle sensors (not shown) and/or systems indicating a vehicle status and/or other vehicle data, which may be sent to the video display controller 304 to adjust content and/or format of the displayed data, in one or more embodiments. For example, a current speed may be supplied (e.g., via a controller-area network (CAN) bus of the vehicle 102) to the vehicle input interface 326 and sent to the video display controller 304 to update the display of a current speed of the vehicle 102. The vehicle input interface 326 may also receive input from a navigation module (not shown) of the vehicle 102 and/or other information sources within the vehicle 102.

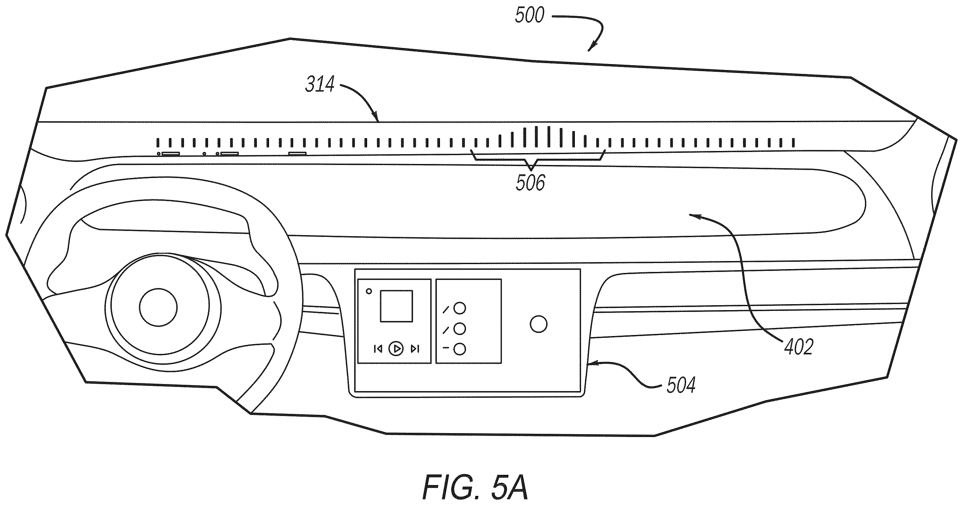

FIGS. 5A-5E are example embodiments of a visualized surround view system 500 that is configured to be displayed (e.g., projected) on the portion 314 of the surface 316 as well as on an infotainment screen 504 of the vehicle 102. For example, the one or more functionalities of the visualized surround view system 500, described herein, provide the user 104 with an enhanced awareness of the environment 502 associated with the vehicle 102. It is understood that the enhanced awareness of the environment 502 provided to the user 104 also enhances safety features offered to the user 104 that correspond to reducing potential vehicle-related accidents (e.g., a collision with one or more objects such as pedestrian(s), cyclist(s), animal(s), or other obstacles).

In one or more embodiments, the visualized surround view system 500 utilizes the sensor suite 106 to detect the one or more objects within a distance-related threshold from the vehicle 102. In one or more examples, the distance-related threshold can be a predefined distance from the vehicle 102 that is acceptable as to avoid any collision(s) between the vehicle 102 and any of the one or more objects. It is understood that any distance from the vehicle 102 can be considered acceptable.

In one or more embodiments, the visualized surround view system 500 is initialized automatically or manually. For example, the visualized surround view system 500 can be automatically initialized in response to the vehicle 102 shifting a gear, as is described herein. As another example, visualized surround view system 500 can be manually initialized in response to the user 104 pressing a button (not shown) located inside a body of the vehicle 102 such as, but not limited to, a hard key button located in a center console (not shown) of the vehicle 102.

In one or more examples, and regardless of the manner (e.g., automatic or manual) by which the visualized surround view system 500 is initialized, a symbolic view (e.g., a graphical view) of the environment 502 can be panoramically displayed on the portion 314 of the surface 316, as is generally shown in FIG. 5A. For example, the symbolic view of the environment 502 can include a variety of lines that can span the entirety of the portion 314 of the surface 316, which corresponds to a similar width to that of a front end of the vehicle 102. In one or more examples, the width of the symbolic view of the environment 502 corresponding to the width of the vehicle 102 provides an intuitive and panoramic display to the user 104 so that the user 104 can easily identify an exact location of any hazard within a collective view of each sensor within the sensor suite(s) (e.g., the front sensor suite 106a, the back sensor suite 106b, as well as any other sensor suite(s) included within a construct of the vehicle 102 such as along the sides of the vehicle 102) of the vehicle 102.

As another example, a number of lines, of the variety of lines, corresponding to a hazard relative to the location of the vehicle 102 can gradually lengthen (e.g., represented as a plurality of lengthened lines 506), with the middle-most line of the plurality of lengthened lines 506 indicating an exact position of the hazard. As yet another example, the plurality of lengthened lines 506 can be represented as color-coded visuals indicative of a proximity of the hazard from the location of the vehicle 102. For example, each line of the variety of lines can generally appear to be green in color, which indicates an absence of any hazards. However, in an instance where a hazard is detected as being within the distance-related threshold in relation to the location of the vehicle 102, each line of the plurality of lengthened lines 506 can appear to gradually change from yellow to red, with red corresponding to the exact position of the hazard. It is understood, however, that any color(s) can be used in relation to any of the variety of lines as well as to indicate the presence of any hazard in relation to the location of the vehicle 102.

As a further example, any of the sensor suite(s) (e.g., the front sensor suite 106a, the back sensor suite 106b, as well as any other sensor suite(s) included within the construct of the vehicle 102 such as along the sides of the vehicle 102) of the vehicle 102 can detect a directional approach of any hazards in relation to the vehicle 102. For example, an arrow 508 (e.g., a left-oriented arrow 508a and a right-oriented arrow 508b) can correspond to the detected directional approach of the hazard(s) in relation to the vehicle 102.

As yet another example, one or more alerts can be transmitted to the user 104 of the vehicle 102 in response to the detection of any hazards. In one or more examples, the one or more alerts can include one or more visual alerts (e.g., one or more written messages on at least the portion 314 of the surface 316), auditory alerts (e.g., emanated from one or more speakers of the vehicle 102), haptic alerts (e.g., one or more vibrations in a steering wheel or seat of the vehicle 102), or a combination thereof, among others. As an example, a frequency and/or tone of the one or more alerts transmitted to the user 104 of the vehicle 102 can correspond to a proximity of the hazard from the location of the vehicle 102. For example, quickly repeated sounds and vibrations as well as a written warning displayed on the portion 314 of the surface 316 can correspond to an instance wherein the hazard is within a close proximity to the location of the vehicle 102. As another example, a more sporadic tone of the sounds and vibrations, as well as a content of the written warning displayed on the portion 314 of the surface 316, can correspond to an instance wherein the hazard is located farther away from the location of the vehicle 102. As an additional example, any of the visual, auditory, and/or haptic alerts can correspond to the orientation of the arrow. For example, visual, auditory, and/or haptic alerts emanating from a right side of the user 104 (e.g., sound from right-sided speakers, display on right-sided portion 314 of the surface, and/or vibration(s) from right side of the seat or steering wheel) can correspond to hazard(s) activating a display of the left-oriented arrow 508a. As another example, visual, auditory, and/or haptic alerts emanating from a left side of the user 104 (e.g., sound from left-sided speakers, display on left-sided portion 314 of the surface, and/or vibration(s) from left side of the seat or steering wheel) can correspond to hazard(s) activating a display of the right-oriented arrow 508b.

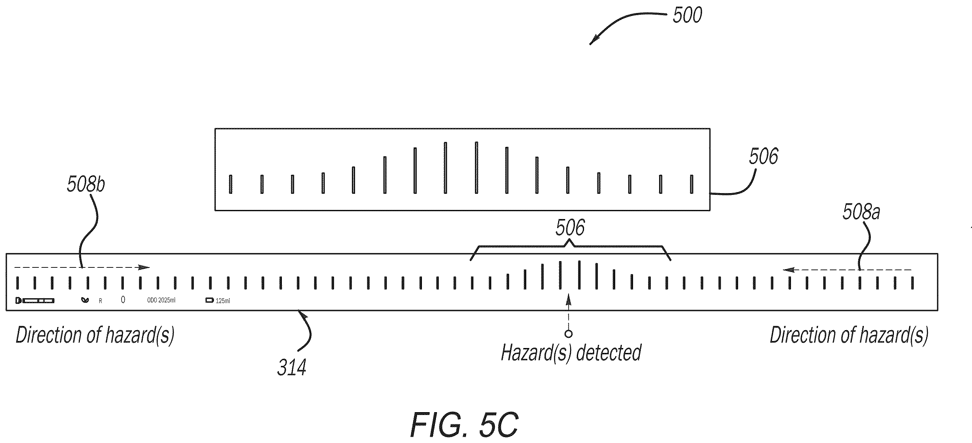

In one or more embodiments, the visualized surround view system 500 can be automatically initialized in response to the vehicle 102 shifting into a reverse gear. As an example, and with reference to FIGS. 5C and 5D, when the vehicle 102 shifts into the reverse gear, a panoramic view of the environment 502 as well as a panoramic view 510 of the vehicle 102 is displayed on the infotainment screen 504. While the infotainment screen 504 is depicted as showing the environment 502 as well as the panoramic view 510 of the vehicle 102, it is understood that the infotainment screen 504 is configured to display any vehicle-related function to the user 104.

In one or more embodiments, and as shown in FIG. 5C, an instance is shown where a hazard (e.g., a pedestrian 512) meets or exceeds the distance-related threshold and is approaching the location of the vehicle 102 from the right rear-side of the vehicle 102. It is understood that the hazard can represent any object such as an animal or other vehicle and is not limited to a pedestrian. As an example, the panoramic view 510 of the vehicle 102 pictorially indicates a general location of the pedestrian 512 in relation to the location of the vehicle 102 by highlighting an area corresponding to the right rear-side bumper of the vehicle 102 closest to the location of the pedestrian 512. As another example, the panoramic view of the environment 502 corresponds to at least a field of view of the back sensor suite 106b and shows the pedestrian 512 approaching the vehicle 102 from the right rear-side of the vehicle 102. As a further example, the location of the pedestrian 512 is also indicated by the plurality of lengthened lines 506 as well as the left-oriented arrow 508a. It is understood that the panoramically displayed indication of the location of the pedestrian 512 utilizing the plurality of lengthened lines 506 as well as the left-oriented arrow 508a provides the user 104 with an intuitive view of the exact location of the pedestrian 512 in relation to the location of the vehicle 102. As yet another example, the one or more alerts corresponding to the location of the pedestrian 512 can be transmitted to the user 104 by a visual, auditory, and/or haptic alert, as is described herein.

In one or more embodiments, and as shown in FIG. 5D, an instance is shown where the pedestrian 512 meets or exceeds the distance-related threshold and is approaching the location of the vehicle 102 from the left rear-side of the vehicle 102. It is understood that the hazard can represent any object such as an animal or other vehicle and is not limited to a pedestrian. As an example, the panoramic view 510 of the vehicle 102 pictorially indicates a general location of the pedestrian 512 in relation to the location of the vehicle 102 by highlighting an area corresponding to the left rear-side bumper of the vehicle 102 closest to the location of the pedestrian 512. As another example, the panoramic view of the environment 502 corresponds to at least a field of view of the back sensor suite 106b and shows the pedestrian 512 approaching the vehicle 102 from the left rear-side of the vehicle 102. As a further example, the location of the pedestrian 512 is also indicated by the plurality of lengthened lines 506 as well as the right-oriented arrow 508b. It is understood that the panoramically displayed indication of the location of the pedestrian 512 utilizing the plurality of lengthened lines 506 as well as the right-oriented arrow 508b provides the user 104 with an intuitive view of the exact location of the pedestrian 512 in relation to the location of the vehicle 102. As yet another example, the one or more alerts corresponding to the location of the pedestrian 512 can be transmitted to the user 104 by a visual, auditory, and/or haptic alert, as is described herein.

In one or more embodiments, the visualized surround view system 500 can be automatically initialized in response to the vehicle 102 shifting into a forward gear. As an example, and with reference to FIG. 5E, when the vehicle shifts into the forward gear, the panoramic view of the environment 502 as well as the panoramic view 510 of the vehicle 102 is displayed on the infotainment screen 504. While the infotainment screen 504 is depicted as showing the environment 502 as well as the panoramic view 510 of the vehicle 102, it is understood that the infotainment screen 504 is configured to display any vehicle-related function to the user 104.

Referring to FIG. 5E, a transparent hood mode initiated by the visualized surround view system 500 in consideration of the location of the vehicle 102 is shown. While the infotainment screen 504 is depicted as showing a speedometer, a gas level, a mileage count, a driving mode, and a driving path, it is understood that the infotainment screen 504 is configured to display any vehicle-related function to the user 104. For example, the infotainment screen 504 is configured to display the panoramic view of the environment 502 and/or the panoramic view 510 of the vehicle 102 that corresponds to at least a field of view of the front sensor suite 106a.

It is understood that in each use-case described herein, the plurality of lengthened lines 506 can correspond to a particular sensor suite activated by the gear shift. For example, in an instance wherein the vehicle 102 is in reverse the plurality of lengthened lines 506 corresponds to one or more hazards detected by the back sensor suite 106b. As another example, in an instance wherein the vehicle 102 is in forward the plurality of lengthened lines 506 corresponds to one or more hazards detected by the front sensor suite 106a. As a further example, in any case, the user 104 can choose to display any side view of the vehicle 102 corresponding to any sensor suite(s) included within the sides of the vehicle 102 on any part of the portion 314 of the surface.

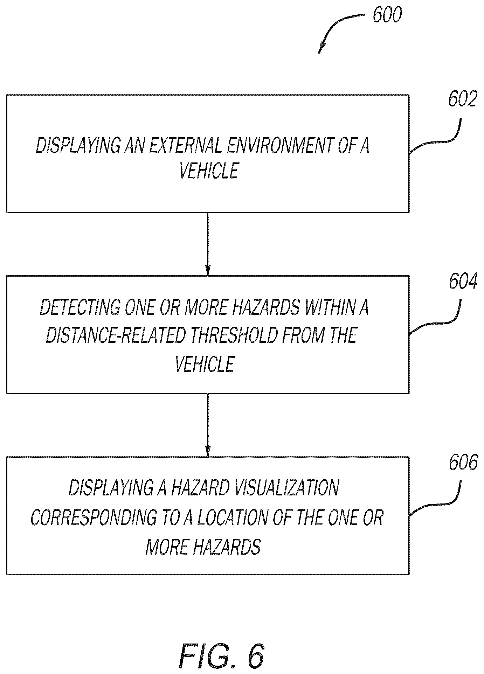

FIG. 6 is a flowchart illustrating an example method 600 for providing a dynamic method for monitoring an external environment (e.g., the environment 502) relative to a location of a vehicle (e.g., the vehicle 102). At operation 602, the vehicle is configured to utilize a vehicle system (e.g., the vehicle-side algorithm 110) to display the external environment of the vehicle in response to an initiation of a gear shift.

At operation 604, the vehicle system is also configured to detect one or more hazards within a distance-related threshold from the vehicle. In one or more examples, one or more sensors of a sensor suite (e.g., the sensor suite 106) are used to detect the one or more hazards. As another example, the one or more sensors include one or more LIDAR sensors, one or more radar sensors, one or more ultrasonic sensors, one or more thermal imaging sensors, one or more night vision sensors, or a combination thereof. At operation 606, the vehicle system is further configured to display a hazard visualization corresponding to a location of the one or more hazards. In one or more examples, the hazard visualization is displayed in response to detecting the one or more hazards.

In one or more embodiments, the vehicle system is further configured to display the external environment of the vehicle associated with a field of view corresponding to a rear-set of sensors (e.g., the back sensor suite 106b) of the sensor suite in response to an initiation of a reverse gear shift. In one or more embodiments, the vehicle system is additionally configured to display the external environment of the vehicle associated with a field of view corresponding to a front-set of sensors (e.g., the front sensor suite 106a of the sensor suite in response to an initiation of a forward gear shift. In one or more embodiments, the vehicle system is also configured to display the external environment of the vehicle associated with a field of view corresponding to one or more side-positioned sensors of the sensor suite in response to the initiation of the gear shift.

In one or more embodiments, the vehicle system is configured to highlight an area associated with a location of the one or more hazards via a panoramic view of the vehicle, stream the one or more hazards approaching the vehicle via a panoramic view of the external environment of the vehicle, and/or highlight the location of the one or more hazards via a portion of a surface of the vehicle, wherein the portion of the surface is configured to graphically display the location of the one or more hazards. In one or more embodiments, the vehicle system is also configured to transmit one or more alerts in response to detecting the one or more hazards, wherein the one or more alerts include one or more visual alerts, one or more auditory alerts, one or more haptic alerts, or a combination thereof.

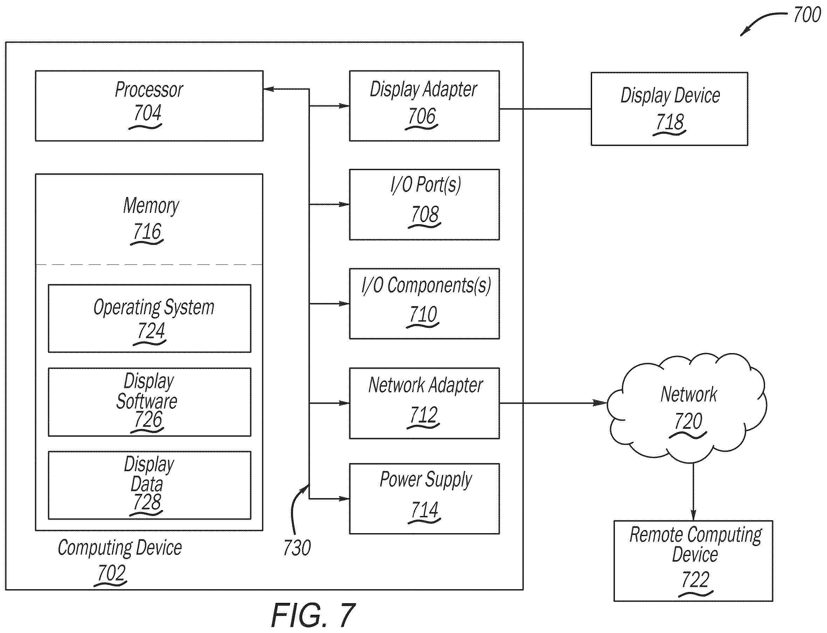

FIG. 7 illustrates an operating environment 700, such as a computer system, that facilitates the performance of one or more systems and methods described herein. More specifically, the systems and methods described herein can be implemented using a computing device 702. For example, the computing device 702 can be a personal computer, a desktop, a laptop, a tablet, a hand-held computer, a server, a workstation, a mainframe, a wearable computer, a supercomputer, or a combination thereof. However, it is understood that the aforementioned examples of the computing device 702 is non-exhaustive and the computing device 702 can be any type of processing or computing device. The computing device 702 generally includes a processor 704, a display adapter 706, one or more input/output port(s) 708, one or more input/output component(s) 710, a network adapter 712, a power supply 714, and a memory 716. However, it is understood that the computing device 702 can include any additional components therein and is not required to include any of the listed components (e.g., the processor 704, the display adapter 706, the one or more input/output port(s) 708, the one or more input/output component(s) 710, the network adapter 712, the power supply 714, and the memory 716).

The processor 704 is configured to provide instructions to the computing device 702 so that the computing device 702 can process one or more tasks including the implementation of a software program to perform one or more operations as described in more detail herein. It is also understood that the computing device 702 may include any number or processors 704 therein. The display adapter 706 can be a graphics card or a video board that provides the computing device 702 with a capability to display content on a display device 718. For example, the display device 718 can be any screen, monitor, and/or light-emitting component associated with any of the personal computer, the desktop, the laptop, the tablet, the hand-held computer, the server, the workstation, the mainframe, the wearable computer, the supercomputer, or a combination thereof. However, it is understood that the aforementioned examples of the display device 718 is non-exhaustive and that the display device 718 can be any type of device capable of providing a visual display.

The input/output port(s) 708 provide a number of interfaces (e.g., sockets) for one or more cables to connect to the computing device 702. It is understood that there may be any number of input/output port(s) 708 on the computing device 702. For example, the input/output port(s) 708 enables the computing device 702 to receive signals and/or data from an external device connected to the computing device 702 via the one or more cables. As another example, the input/output port(s) 708 enables the computing device 702 to send signals and/or data to an external device connected to the computing device 702 via the one or more cables. The input/output component(s) 710 can include one or more components that support the input/output port(s) 708 such as, but not limited to, a switch, a push button, a pressure mat, a float switch, a keypad, a radio receive, or a combination thereof.

The network adapter 712 can be any type of network interface controller that enables communication over a network 720 with another computing device, such as a remote computing device 722. For example, the remote computing device 722 can be a user device such as a cellular-phone, a smartphone, a tablet, a laptop, or a combination thereof. The power supply 714 is configured to convert alternating high voltage current (e.g., AC) into direct current (e.g., DC) to provide power to the other components (e.g., the processor 704, the display adapter 706, the one or more input/output port(s) 708, the one or more input/output component(s) 710, the network adapter 712, and the memory 716) of the computing device 702.

Additionally, the memory 716 can be a mass storage device and/or a system memory such as a hard disk drive, a memory card, a solid-state drive, RAM, or a combination thereof. The memory 716 is configured to provide storage for instructions and data associated with the operation of the computing device 702. The memory 716 can generally include an operating system 724, display software 726, and display data 728 to perform one or more operations described in more detail herein. For example, the operating system 724 is configured to manage and/or process any of the data and/or instructions associated with the display software 726 and/or the display data 728, as described in more detail herein.

Furthermore, a system bus 730 is also included within the computing device 702 that is configured to couple each of the various components (e.g., the processor 704, the display adapter 706, the one or more input/output port(s) 708, the one or more input/output component(s) 710, the network adapter 712, the power supply 714, and the memory 716) of the computing device 702. It is also understood that each of the components of the computing device 702, and the functionality associated with each of the components of the computing device 702, may be implemented within the remote computing device 722. While the operating environment illustrated within FIG. 7 depicts a particular configuration associated with at least the computing device 702, the network 720, and the remote computing device 722, it is understood that the operating environment may be configured in any way.

Thus, one or more examples of the present disclosure provide a system for detecting one or more hazards in relation to a location of a vehicle by monitoring an environment surrounding the location of the vehicle by utilizing a sensor suite to identify and highlight any of the one or more hazards that meet or exceed a threshold, as is described herein.

Unless otherwise expressly indicated herein, all numerical values indicating mechanical/thermal properties, compositional percentages, dimensions and/or tolerances, or other characteristics are to be understood as modified by the word "about" or "approximately" in describing the scope of the present disclosure. This modification is desired for various reasons including industrial practice, material, manufacturing, and assembly tolerances, and testing capability.

As used herein, the phrase at least one of A, B, and C should be construed to mean a logical (A OR B OR C), using a non-exclusive logical OR, and should not be construed to mean "at least one of A, at least one of B, and at least one of C."

In this application, the term "controller" and/or "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The term memory is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general-purpose computer to execute one or more particular functions embodied in computer programs. The functional blocks, flowchart components, and other elements described above serve as software specifications, which can be translated into the computer programs by the routine work of a skilled technician or programmer.

The description of the disclosure is merely exemplary in nature and, thus, variations that do not depart from the substance of the disclosure are intended to be within the scope of the disclosure. Such variations are not to be regarded as a departure from the spirit and scope of the disclosure.

## Claims

1. A method comprising:
displaying an external environment of a vehicle in response to an initiation of a gear shift;
detecting, by one or more sensors of a sensor suite, one or more hazards within a distance-related threshold from the vehicle; and
displaying a hazard visualization corresponding to a location of the one or more hazards in response to detecting the one or more hazards.

2. The method of Claim 1, wherein the one or more sensors include one or more LIDAR sensors, one or more radar sensors, one or more ultrasonic sensors, one or more thermal imaging sensors, one or more night vision sensors, or a combination thereof.

3. The method of Claim 1 or 2, further comprising:
displaying the external environment of the vehicle associated with a field of view corresponding to a rear-set of sensors of the sensor suite in response to an initiation of a reverse gear shift.

4. The method of any of Claims 1 to 3, further comprising:
displaying the external environment of the vehicle associated with a field of view corresponding to a front-set of sensors of the sensor suite in response to an initiation of a forward gear shift.

5. The method of any of Claims 1 to 4, further comprising:
displaying the external environment of the vehicle associated with a field of view corresponding to one or more side-positioned sensors of the sensor suite in response to the initiation of the gear shift.

6. The method of any of Claims 1 to 5, wherein displaying the hazard visualization further comprises:
highlighting an area associated with a location of the one or more hazards via a panoramic view of the vehicle;
streaming the one or more hazards approaching the vehicle via a panoramic view of the external environment of the vehicle; and
highlighting the location of the one or more hazards via a portion of a surface of the vehicle, wherein the portion of the surface is configured to graphically display the location of the one or more hazards.

7. The method of any of Claims 1 to 6, wherein displaying the hazard visualization further comprises:
highlighting an area associated with a location of the one or more hazards via a panoramic view of the vehicle;
streaming the one or more hazards approaching the vehicle via a panoramic view of the external environment of the vehicle; or
highlighting the location of the one or more hazards via a portion of a surface of the vehicle, wherein the portion of the surface is configured to graphically display the location of the one or more hazards.

8. The method of any of Claims 1 to 7, further comprising:
transmitting one or more alerts in response to detecting the one or more hazards, wherein the one or more alerts include one or more visual alerts, one or more auditory alerts, one or more haptic alerts, or a combination thereof.

9. A system comprising:
a processor; and
a non-transitory computer-readable medium including instructions that are executable by the processor, wherein the instructions include:
displaying an external environment of a vehicle in response to an initiation of a gear shift;
detecting, by one or more sensors of a sensor suite, one or more hazards within a distance-related threshold from the vehicle; and
displaying a hazard visualization corresponding to a location of the one or more hazards in response to detecting the one or more hazards.

10. The system of Claim 9, wherein the one or more sensors include one or more LIDAR sensors, one or more radar sensors, one or more ultrasonic sensors, one or more thermal imaging sensors, one or more night vision sensors, or a combination thereof.

11. The system of Claim 9 or 10, wherein the instructions further include:
displaying the external environment of the vehicle associated with a field of view corresponding to a rear-set of sensors of the sensor suite in response to an initiation of a reverse gear shift.

12. A system comprising:
a processor; and
a non-transitory computer-readable medium including instructions that are executable by the processor, wherein the instructions include:
displaying an external environment of a vehicle in response to an initiation of a gear shift;
detecting, by one or more sensors of a sensor suite, one or more hazards within a distance-related threshold from the vehicle;
highlighting, in response to detecting the one or more hazards, an area associated with a location of the one or more hazards via a panoramic view of the vehicle; and
transmitting, in response to detecting the one or more hazards, one or more alerts, wherein the one or more alerts include one or more visual alerts, one or more auditory alerts, one or more haptic alerts, or a combination thereof.

13. The system of Claim 12, wherein the one or more sensors include one or more LIDAR sensors, one or more radar sensors, one or more ultrasonic sensors, one or more thermal imaging sensors, one or more night vision sensors, or a combination thereof.

14. The system of Claim 12 or 13, wherein the instructions further include:
displaying the external environment of the vehicle associated with a field of view corresponding to a rear-set of sensors of the sensor suite in response to an initiation of a reverse gear shift.

15. The system of any of Claims 12 to 14, wherein the instructions further include:
displaying the external environment of the vehicle associated with a field of view corresponding to a front-set of sensors of the sensor suite in response to an initiation of a forward gear shift.
